# EUROPÄISCHE PATENTSCHRIFT

(11) **EP 4 174 547 B1**
(45) Veröffentlichungstag und Bekanntmachung des Hinweises auf die Patenterteilung: **30.04.2025**
(21) Anmeldenummer: 22203549.5
(22) Anmeldetag: 25.10.2022
(51) Int. Cl.: G02B 6/50, H02G 1/06, H02G 9/02, G02B 6/44

(54) **KABELVERBUND**
CABLE COMPOSITE
FAISCEAU DE CÂBLES

(30) Priorität: 29.10.2021 DE 102021128334
(43) Veröffentlichungstag der Anmeldung: 03.05.2023
(73) Patentinhaber: Deutsche Telekom AG, 53113 Bonn (DE)
(72) Erfinder: PELLENZ, Elmar, 55296 Lörzweiler (DE); BUERSTENBINDER, Lars, 17291 Prenzlau (DE); KREIER, Maximilian, 97464 Oberwerrn (DE)
(74) Vertreter: Nern, Peter-Michael

(56) Entgegenhaltungen:
- EP-A1- 1 309 054
- EP-A1- 2 080 944
- FR-A1- 2 528 220
- JP-A- 2005 204 374
- JP-A- 2014 153 521
- US-A- 5 625 737
- US-A1- 2010 158 455

## Beschreibung

Die Erfindung betrifft einen Kabelverbund, das heißt einen Verbund von mehreren zu ihrer gemeinsamer Verlegung darin zusammengefassten Kabeln. Sie bezieht sich hierbei insbesondere auf einen mehrere Lichtleiterkabel (Lichtwellenleiter - LWL), respektive Glasfaserkabel, wie insbesondere Glasfaserminikabel oder Glasfasermikrokabel, zusammenfassenden Kabelverbund, ohne jedoch auf Kabel dieser Art beschränkt zu sein. Vielmehr können in dem betreffenden, in spezieller Weise gestalteten Kabelverbund im Grunde Kabel beliebiger Art zum Zweck einer gemeinsamen Verlegung zusammengefasst sein.

Grundsätzlich kann es sich demnach bei den in dem Kabelverbund zusammengefassten Kabeln sowohl um Kabel zur Daten- oder Signalübertragung, also um Kommunikationskabel, als auch um Kabel zur Energie-, respektive Stromübertragung handeln. Mit Blick auf die erstgenannte Kategorie der Kommunikationskabel kann es sich bei den in dem erfindungsgemäß gestalteten Kabelverbund zusammengefassten Kabeln um Kabel mit einem oder mehreren Drähten, respektive Adern, zur elektrischen Datenübertragung oder aber um Glasfaserkabel zur optischen Datenübertragung handeln.

Vor dem Hintergrund des bevorzugten Anwendungsfalls einer gemeinsamen Verlegung von Glasfaserkabeln in Form eines in erfindungsgemäßer Weise gestalteten Kabelverbunds sollen sich die nachfolgenden Ausführungen schwerpunktmäßig - wie gesagt, jedoch ohne Beschränkung - auf diesen Anwendungsfall beziehen.

Bei der Verlegung von Glasfaserkabeln zur Bereitstellung von Kommunikationsanschlüssen ist es üblich, ein entsprechendes Glasfaserkabel in ein zuvor im Erdreich verlegtes Leerrohr aus Kunststoff einzubringen. In diesem Zusammenhang ist es auch bekannt, mehrere derartige, zur Aufnahme je eines Glasfaserkabels vorgesehene Kunststoffrohre mittels eines die Kunststoffrohre umgebenden gemeinsamen Mantels zu einem Kabel-Rohrverband zusammenzufassen. Ein solcher Rohrverband wird im Erdreich verlegt und kann dann je nach Bedarf mit entsprechenden Glasfaserkabeln bestückt werden. Hinsichtlich des nachträglichen Einbringens der Glasfaserkabel in die Leerrohre, respektive in die Kunststoffrohre, ist es beispielsweise bekannt geworden, die Glasfaserkabel mittels einer Einblasvorrichtung in die Kunststoffrohre einzublasen.

In der Praxis gestaltet sich dies so, dass ein eine hinreichend große Zahl von Leerrohren aufweisender, also zunächst noch nicht mit Glasfaserkabeln bestückter Kabel-Rohrverband in eine durch zuvor ausgeführte Erdarbeiten geschaffene Kabeltrasse eingebracht, das heißt in der Erde verlegt wird. An den entlang einer solchen Kabeltrasse gelegenen Grundstücken, welche durch das den Kabel-Rohrverband bereitstellende Unternehmen mit einem Kommunikationsanschluss versorgt werden sollen, werden entsprechende Abzweige geschaffen. Nach der Schaffung dieser Abzweige werden in die Leerrohre des Kabel-Rohrverbandes, so auch in die aus diesem abzweigenden Kunststoffrohre, vor Ort an der Baustelle in entsprechender Anzahl die Glasfaserkabel in die Leerrohre (Kunststoffrohre) eingebracht, zum Beispiel eingeblasen. Häufiger bleibt dabei eine größere Zahl von Leerrohren, respektive Kunststoffrohren, des Kabel-Rohrverbandes zunächst unbestückt. Diese unbestückten, überzähligen Leerrohre können später dazu genutzt werden, im Nachhinein Glasfaserkabel in Kunststoffrohre des Kabel-Rohrverbandes zur Versorgung weiterer, an der Kabeltrasse gelegener Grundstücke mit einem Kommunikationsanschluss des Betreibers des Kabel-Rohrverbandes einzubringen.

Nachteilig ist es hierbei, dass das Einbringen der Glasfaserkabel vor Ort an der Baustelle mit einem nicht unerheblichen Montageaufwand verbunden ist. Letzteres gilt vor allen Dingen dann, wenn die Versorgung eines oder einiger Grundstücke durch das den Kabel-Rohrverband bereitstellende Unternehmen erst später, also im Nachhinein, zu einem gegenüber der grundlegenden Erschließung nachgelagerten Ausführungstermin erfolgen soll. Zur nachträglichen Bestückung der Leerrohre ist es dann insbesondere erforderlich, das Erdreich sowie den Kabel-Rohrverband an entsprechenden Übergangsstellen erneut zu öffnen. Für den Vorgang des Einblasens der im Nachhinein einzufügenden Glasfaserkabel ist hierbei das erforderliche Equipment, nämlich beispielsweise eine oder mehrere Einblasvorrichtungen, zur Ausführung der Arbeiten mitzuführen. Das heißt, insbesondere das nachträgliche Bereitstellen von Glasfaserkabeln zur Herstellung eines Kommunikationsanschlusses verursacht einen beträchtlichen logistischen Aufwand und Montageaufwand vor Ort an der Baustelle.

In der DE 10 2019 117 612 A1 wird eine technische Lösung beschrieben, mit deren Hilfe die zuvor dargestellten Nachteile vermieden werden können. Gemäß dieser Lösung werden mehrere Kommunikationskabel, insbesondere Glasfaserkabel, zur gemeinsamen Verlegung zu einem Kabel-Rohrverband zusammengefasst. Innerhalb des besagten Kabel-Rohrverbands sind die einzelnen Kabel jeweils in einem Kunststoffrohr angeordnet, wobei die durch einen gemeinsamen, sie umgebenden Mantel zu dem Verband zusammengefassten Kunststoffrohre bereits herstellerseitig jeweils mit einem Kommunikationskabel bestückt werden, so dass die Kommunikationskabel nicht mehr erst auf der Baustelle, respektive unmittelbar vor ihrer Verlegung, in die mittels des sie umgebenden Mantels zu dem Rohrverband zusammengefassten Kunststoffrohre eingebracht werden müssen.

Zur Verlegung der Kommunikationskabel wird der gesamte Kabel-Rohrverband mit den die Kommunikationskabel aufnehmenden Kunststoffrohren entlang einer Kabeltrasse in einen dafür im Erdreich geschaffenen Graben eingebracht. Um ein an der Kabeltrasse gelegenes Grundstück beispielsweise an ein Kommunikationsnetz anzuschließen, also ein Kommunikationskabel des in dem Graben verlegten Kabel-Rohrverbandes mit einem auf dem Grundstück vorgesehenen Anschlusspunkt zu verbinden, werden in den Mantel des Kabel-Rohrverbandes zwei Öffnungen eingebracht. Eine erste Öffnung wird auf Höhe des anzuschließenden Grundstücks erzeugt und eine zweite in einer Entfernung zu der ersten Öffnung, welche mindestens der Entfernung zwischen dieser ersten Öffnung und dem Kabelanschlusspunkt auf dem zu versorgenden Grundstück entspricht. An der zweiten, in dem Mantel des Kabel-Rohrverbandes erzeugten Öffnung werden ein Rohr und das darin befindliche Kommunikationskabel durchtrennt. Das vorgenannte durchtrennte Rohr wird schließlich zusammen mit dem in ihm angeordneten Kommunikationskabel an der ersten in dem Mantel des Kabel-Rohrverbandes geschaffenen Öffnung auf Höhe des zu versorgenden Grundstücks herausgezogen und in Richtung des Anschlusspunktes auf diesem Grundstück verlegt.

Trotzdem die zuvor dargestellte Lösung die auf der Baustelle zum Anschluss eines Grundstücks erforderlich werdenden Arbeiten deutlich reduziert, weist auch diese einige Nachteile auf. Ein erster kann darin gesehen werden, dass die beschriebene Lösung, wie auch andere eingangs beschriebene, sich Kunststoffleerrohren bedienende Lösungen, einen nicht unbeträchtlichen Materialaufwand, insbesondere in Gestalt der Kunststoffleerrohre, mit sich bringt. Ein weiterer besteht darin, dass gemäß dem in der DE 10 2019 117 612 A1 beschriebenen Verlegeverfahren der für den Anschluss eines Grundstücks nicht benötigte, das heißt das auf Höhe der zweiten Öffnung im Mantel des Kabel-Rohrverbandes abgetrennte Ende des Kommunikationskabels mit dem das Kabel aufnehmenden Kunststoffrohr im Boden verbleibt. Eine solche Verfahrensweise ist aber unter dem Gesichtspunkt der Materialkosten weniger günstig. In der EP 1 309 054 A1 wird eine weitere Lösung beschrieben. Gemäß dieser weiteren Lösung werden mehrere Kommunikationskabel in einer Doppelrohrstruktur zusammengefügt.

Aufgabe der Erfindung ist es, eine alternative Lösung zur gemeinsamen Verlegung mehrerer Kabel bereitzustellen, welche die vorgenannten Nachteile vermeidet. Die insoweit zu schaffende Lösung soll insbesondere den Montageaufwand vor Ort auf der Baustelle verringern und gleichzeitig einen möglichst geringen Materialaufwand bedingen. Im Einklang mit den beiden vorgenannten Forderungen soll es dabei möglich sein, einzelne Grundstücke entlang einer Trasse, auf welcher die Kabel verlegt werden, flexibel anzuschließen, also einen Anschlusspunkt eines betreffenden Grundstücks mit einem dieser Kabel zu verbinden.

Die Aufgabe wird durch einen Kabelverbund mit den Merkmalen des Patentanspruchs 1 gelöst. Vorteilhafte Ausgestaltungen und Weiterbildungen der Erfindung sind durch die Unteransprüche gegeben.

Zur Lösung der Aufgabe wird ein Kabelverbund mit mehreren, zu ihrer gemeinsamen Verlegung herstellerseitig zu einem auf einer Kabeltrommel aufgetrommelten Verbund zusammengefassten Kabeln bereitgestellt. Jedes der Kabel dieses Kabelverbunds besteht aus mindestens einer Übertragungsleitung und einem umgebenden Kabelmantel, wobei der Kabelmantel die von ihm umgebene Übertragungsleitung oder -leitungen gegenüber Umwelteinflüssen, wie sie insbesondere nach einer Verlegung im Erdreich auftreten, sowie vor mechanischen Belastungen schützt. Hinsichtlich der Art der Kabel, respektive der in ihnen enthaltenen mindestens einen Übertragungsleitung, sollen nachfolgend genauere Ausführungen gegeben werden.

Die mehreren Kabel sind mittels mehrerer sie umgebender Verbundelemente direkt zu dem Kabelverbund zusammengefasst, und zwar derart, dass jedes der Kabel bezüglich eines jeweiligen, bei der Verlegung von der Kabeltrommel abgerollten Abschnitts des Kabelverbunds innerhalb des mindestens einen, die Kabel umgebenden Verbundelements sowohl gegen dieses Verbundelement als auch gegen die jeweils anderen Kabel des Kabelverbunds in der Längsrichtung beweglich ist. Aufgrund dieser Beweglichkeit der einzelne Kabel in der Längsrichtung, also in der Erstreckungsrichtung und somit vor und zurück, bezogen auf die Verlegerichtung des Kabelverbunds, ist ein jeweiliges Kabel über eine in dem Kabelverbund mit den Verbundelementen bestehende Ausnehmung zur Schaffung eines Kabelabzweigs aus dem Kabelverbund herauslösbar.

Das heißt, die Kabel sind in dem Kabelverbund weder mechanisch fest noch dauerhaft miteinander verbunden. Die Kabel sind hierbei nicht einzeln durch ein sie umgebendes Rohr (Kunststoffrohr) aufgenommen, sondern mittels des mindestens einen Verbundelements direkt, das heißt unmittelbar, zu dem Kabelverbund zusammengefügt. Die Verbundelemente - genauere Ausführungen zu dessen Beschaffenheit erfolgen später - dienen lediglich dem temporären Zusammenhalt der Kabel und damit dazu, mehrere Kabel entlang einer Kabeltrasse in einem dafür geschaffenen Graben im Erdreich gleichzeitig zu verlegen. Die Kabel werden hierzu, wie bereits ausgeführt, bereits herstellerseitig im Verbund miteinander aufgetrommelt. Die, die Kabel des Kabelverbunds umgebende Verbundelemente haben also weder für die auf der Kabeltrommel aufgerollten Kabel des Kabelverbunds noch für einen von dieser abgerollten und im Erdreich verlegten Abschnitt des Kabelverbunds eine Schutzfunktion. Es dient vielmehr lediglich dazu, eine effiziente Verlegung der in dem Verbund zusammengefassten Kabel zu ermöglichen. In diesem Zusammenhang ist anzumerken, dass bei der hier vorgeschlagenen technischen Lösung bereits der Verzicht auf entsprechende, die einzelnen Kabel aufnehmende Kunststoffrohre zu einer signifikanten Materialeinsparung führt.

Grundsätzlich ist es hierbei möglich, zu einem derartigen Kabelverbund, in welchem die Kabel - wie gesagt - im Grunde nur temporär zusammengefasst sind, Kabel unterschiedlichster Art und folglich für verschiedenste Verwendungszwecke zusammenzuführen. Unter Außerbetrachtlassung eventueller unerwünschter elektromagnetischer Wechselwirkungen zwischen mehreren, in Form eines solchen Kabelverbunds gleichzeitig in einem Kabelgraben verlegten Kabeln, wäre es hierbei sogar denkbar, Stromversorgungskabel und Kommunikationskabel gemeinsam in einem derartigen Kabelverbund zusammenzufassen, wobei dies jedoch im Hinblick auf die schon angesprochenen möglichen Wechselwirkungen und aus sonstigen praktischen Erwägungen heraus regelmäßig eher nicht der Fall sein wird.

Im Hinblick auf bevorzugte Einsatzszenarien besteht eine praxisrelevante Ausbildungsform eines solchen Kabelverbunds vorzugsweise aus mehreren Kommunikationskabeln, das heißt ausschließlich aus darin zusammengefassten Kommunikationskabeln. Besonders bevorzugt handelt es sich bei diesen Kommunikationskabeln um Lichtleiterkabel (synonym auch Lichtleitkabel), wie insbesondere um Glasfaserminikabel oder um Glasfasermikrokabel. Die betreffenden, der Datenübertragung mittels optischer Übertragungsverfahren dienenden Kommunikationskabel, also Lichtleiterkabel, bestehen hierbei typischerweise jeweils aus mehreren, von einem gemeinsamen Kabelmantel umgebenen Lichtleitfasern, respektive Glasfasern. Gemäß dem hier zugrunde gelegten Verständnis weisen dabei Glasfaserminikabel einen Durchmesser von ≤ 6,50 mm (2,70 mm - 6,50 mm) auf, wohingegen Glasfasermikrokabel sogar Durchmesser von ≤ 2,60 mm aufweisen.

Hierbei ist es möglich, dass die jeweils für sich nicht von einem Kunststoffrohr oder dergleichen umgebenen Kabel mittels eines alle Kabel gemeinsam über die gesamte Länge des Kabelverbunds umgebenden, schlauchartigen Verbundelements zu dem Kabelverbund zusammengefasst sind. Bei dieser nicht erfindungsgemäßen Ausbildungsform ist es dann erforderlich, die eingangs angesprochene Ausnehmung zur Schaffung eines Kabelabzweigs mittels eines aus dem Kabelverbund herausgelösten Kabels in dem Verbundelement nach der Verlegung des Kabelverbunds zu schaffen, also gewissermaßen auf der Höhe eines anzuschließenden Grundstücks ein Fenster in das Verbundelement einzubringen. Selbstverständlich muss darüber hinaus auch hier in einem Abstand, welcher der erforderlichen Länge des zu schaffenden Abzweigs entspricht, eine weitere Ausnehmung in das den gesamten verlegten Abschnitt des Kabelverbunds umgebende Verbundelement eingebracht werden, um das für den Abzweig aus dem Kabelverbund herauszulösende Kabel über diese zweite Ausnehmung durchtrennen zu können.

Erfindungsgemäß ist es hingegen nicht erforderlich, eine oder mehrere Öffnungen, respektive Ausnehmungen, in ein Verbundelement einzubringen, um das Herauslösen eines - wie gesagt, selbst nicht von einem Rohr umgebenen - Kabels aus dem Kabelverbund zur Schaffung eines Abzweigs zu ermöglichen. Erfindungsgemäß werden die Kabel des Verbunds durch mehrere streifenförmige, entlang der Erstreckungsrichtung der Kabel (Längsrichtung des Kabelverbunds) zueinander beabstandete Verbundelemente, das heißt durch mehrere sich jeweils bezogen auf die Umfangsrichtung der Kabel in Form eines Streifens erstreckende Verbundelemente, zusammengehalten. Über die gesamte Länge des Kabelverbunds sind hierbei mehrere derartiger streifenförmiger Verbundelemente, vorzugsweise in einem äquidistanten Abstand zueinander angeordnet.

Bei einem aus einer Mehrzahl von Lichtleiterkabeln gebildeten Kabelverbund weisen die streifenförmigen Verbundelemente untereinander beispielsweise einen Abstand zwischen 30 und 60 cm auf und besitzen demgegenüber jeweils eine Streifenbreite von zirka 5 bis 10 cm. Die zwischen den Verbundelementen bestehenden Abstände stellen hierbei bereits von Anfang an bestehende Ausnehmungen dar, über welche die zum Verbund gehörenden Kabel frei zugänglich sind und somit einzelne Kabel zur Schaffung eines jeweiligen Abzweigs an entsprechender Stelle durchtrennt sowie (gegebenenfalls einschließlich des abgetrennten Endes) aus dem Verbund herausgezogen, also herausgelöst werden können.

In vorteilhafter Weise reduzieren sich hierdurch einerseits der Materialaufwand, nämlich die für die nunmehr mehreren Verbundelemente benötigte Materialmenge, sowie der Arbeitsaufwand auf der Baustelle. Letzteres resultiert ersichtlich daraus, dass es bei dieser Ausbildungsform nicht mehr nötig ist, auf der Baustelle im Zuge der Verlegung des Kabelverbunds und der nachfolgenden Schaffung von Abzweigen aus diesem Kabelverbund entsprechende Ausnehmungen mittels dafür erforderlicher Werkzeuge in das beziehungsweise die Verbundelemente einzubringen.

Ungeachtet dessen, ob der Kabelverbund mittels eines sich über dessen gesamte Länge erstreckenden Verbundelements oder mittels mehrerer voneinander beabstandeter Verbundelemente realisiert wird, wird als Material für das oder die Verbundelemente ein Kunststoff, wie beispielsweise Polyethylen vorgeschlagen. Durch die Wahl eines auf das Material des Kabelmantels der jeweiligen zu dem Kabelverbund zusammengefügten Kabel abgestimmten Materials für das oder die Verbundelemente ist, dem Grundgedanken der vorgeschlagenen Lösung folgend, in jedem Falle sicherzustellen, dass innerhalb des oder der Verbundelemente die erforderliche Beweglichkeit der Kabel gegenüber dem Verbundelement und untereinander gegeben ist.

Eine weitere, nicht erfindungsgemäße Ausbildungsform des Kabelverbunds ist dadurch gegeben, dass die zu ihm zusammengefügten Kabel in dem Verbund durch eine insoweit ebenfalls ein Verbundelement ausbildende Verseilung gehalten werden. Auch bei dieser Ausbildungsform, bei welcher beispielsweise ein Faden in einem spiralförmigen Verlauf um die Kabel herumgeschlungen wird, wird es regelmäßig nicht nötig sein, zu Schaffung eines Abzweigs auf der Baustelle eine Ausnehmung in das solchermaßen ausgebildete Verbundelement einzubringen, das heißt den entsprechenden Faden zu zertrennen.

Nachfolgend sollen anhand von Zeichnungen Ausführungsbeispiele für die Erfindung gegeben und deren Verwendung im praktischen Einsatz erläutert werden. Die Zeichnungen zeigen im Einzelnen:
- Fig. 1:: einen Abschnitt eines mittels mehrerer Verbundelemente realisierten Kabelverbunds, nach der beanspruchten Erfindung,
- Fig. 2:: einen Abschnitt eines mittels sich über die gesamte Abschnittslänge erstreckenden Verbundelements realisierten Kabelverbunds, nicht nach der beanspruchten Erfindung,
- Fig. 3:: die Verlegung eines Kabelverbunds gemäß der vorgeschlagenen Lösung in einer Kabeltrasse entlang von mehreren Grundstücken,
- Fig. 4a und 4b:: die Bereitstellung eines Glasfaserkabels für eines der Grundstücke zur Herstellung eines Kommunikationsanschlusses,
- Fig. 5:: die Gegebenheiten nach der Bereitstellung eines Glasfaserkabels für ein weiteres Grundstück bei der Bebauungssituation gemäß den Figuren 3 und 4,
- Fig. 6:: die vorsorgliche Bereitstellung eines Glasfaserkabels für ein weiteres bebautes Grundstück und ein noch nicht bebautes Grundstück gemäß der Bebauungssituation nach den Figuren 3 bis 5.

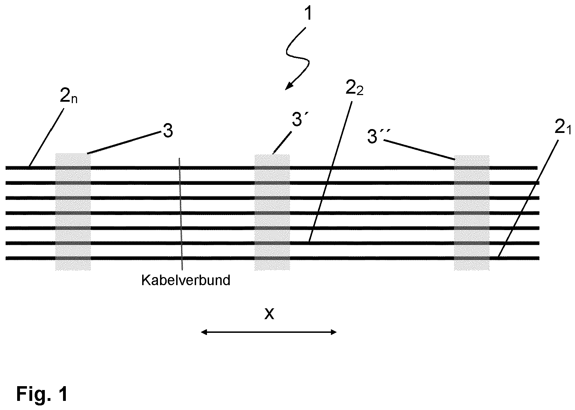

In der Fig. 1 ist eine bevorzugte Ausbildungsform des beschriebenen Kabelverbunds 1 dargestellt, bei welcher die mehreren, diesen Kabelverbund 1 ausbildenden Kabel 2₁ - 2ₙ - beispielsweise Lichtleiterkabel - mit Hilfe mehrerer, in der Erstreckungsrichtung (Längsrichtung x) des Kabelverbunds 1 voneinander beabstandeter Verbundelemente 3, 3', 3" in dem Kabelverbund 1 zusammengehalten werden. Die einzelnen Verbundelemente 3, 3', 3" bestehen aus streifenförmigen Abschnitten aus Polyethylen. Die entsprechenden Verbundelemente 3, 3', 3" sind entlang des gezeigten Abschnitts eines Kabelverbunds 1 in einem Abstand von etwa 30 bis 60 cm zueinander angeordnet. Sie weisen hierbei eine Streifenbreite von jeweils etwa 5 bis 10 cm auf.

Die zwischen den Verbundelementen 3, 3', 3" bestehenden Abstände, respektive Lücken, bilden hierbei Ausnehmungen auf, über welche ein zuvor auf entsprechender Länge durchtrenntes Kabel 2₁ - 2ₙ aus dem Kabelverbund 1 herausgelöst, das heißt herausgezogen, sowie unter Schaffung eines Abzweigs in Richtung eines Anschlusspunktes auf einem Grundstück 5₁ - 5ₙ entlang der Kabeltrasse verlegt werden kann.

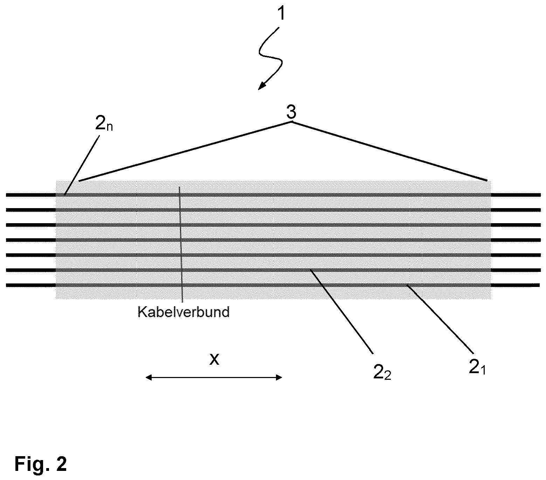

Die Fig. 2 zeigt demgegenüber eine nicht erfindungsgemäße Ausbildungsform, bei welcher der dargestellte Abschnitt des Kabelverbunds 1 durch ein einziges Verbundelement 3 zusammengehalten wird, welches sich über die gesamte Länge des sich vor der Abtrennung des gezeigten Abschnitts noch auf der Kabeltrommel 4 befindenden Kabelverbunds 1 erstreckt. Wie bereits früher ausgeführt, müssen bei der Verwendung dieser Ausbildungsform zur Schaffung eines Abzweigs nach dem Verlegen des Kabelverbunds 1 in dem Verbundelement 3 zwei Fenster, respektive Ausnehmungen, erzeugt werden. Ein erste Ausnehmung zum Herauslösen eines Kabels 2₁ - 2ₙ aus dem Kabelverbund 1 am Ort des zu schaffenden Abzweigs und eine weitere, in einer Entfernung in Richtung zum Ende des Abschnitts, welcher der am Abzweigpunkt für das aus dem Kabelverbund herauszulösende Kabel 2₁ - 2₁ zu dessen Verbindung mit einem Anschlusspunkt des anzuschließenden Grundstücks 5₁ - 5ₙ benötigten Länge entspricht, um hier das zur Herstellung des Abzweigs verwendete Kabel 2₁ - 2ₙ durchtrennen zu können.

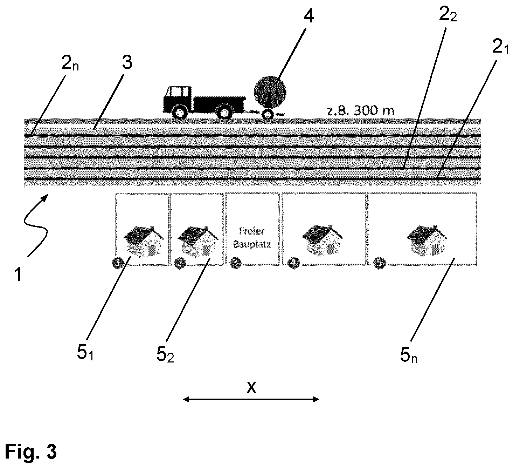

In den nachfolgenden Figuren soll der Vorgang der Verlegung des Kabelverbunds 1. Die Fig. 3 zeigt die Verlegung eines erfindungsgemäßen Kabelverbunds 1 im Erdboden auf einer entlang von fünf einander benachbarten Grundstücken 5₁ - 5ₙ verlaufenden Kabeltrasse. Ein Telekommunikationsunternehmen, durch welches oder in dessen Auftrag die Kabeltrasse angelegt wird, möchte für alle Grundstücke 5₁ - 5ₙ entlang der beispielsweise 300 m langen Kabeltrasse zumindest vorsorglich, nämlich auch für den Fall, dass der Inhaber eines Grundstücks Telekommunikationsdienstleistungen dieses Unternehmens eventuell erst zu einem späteren Zeitpunkt in Anspruch nimmt, ein Kabel 2₁ - 2ₙ, respektive ein Glasfaserkabel (Kommunikationskabel), zur Herstellung eines Kommunikationsanschlusses bereitstellen. Nach der Schaffung eines entsprechenden Grabens im Erdreich wird ein Abschnitt der bereits herstellerseitig zu einem Kabelverbund 1 zusammengefügten und im Verbund auf eine Kabeltrommel 4 aufgetrommelten Kabel 2₁ - 2ₙ von der betreffenden Kabeltrommel 4 abgerollt. Im Zuge seines Abrollens wird der die zu dem Kabelverbund 1 zusammengefügten Kabel 2₁ - 2ₙ in den zuvor entlang der im Beispiel fünf Grundstücke 5₁ - 5ₙ im Erdreich geschaffenen Graben eingefügt und entsprechend dessen Länge ein Abschnitt von dem auf der Kabeltrommel 4 zur Verfügung gestellten Kabelverbund 1 abgetrennt.

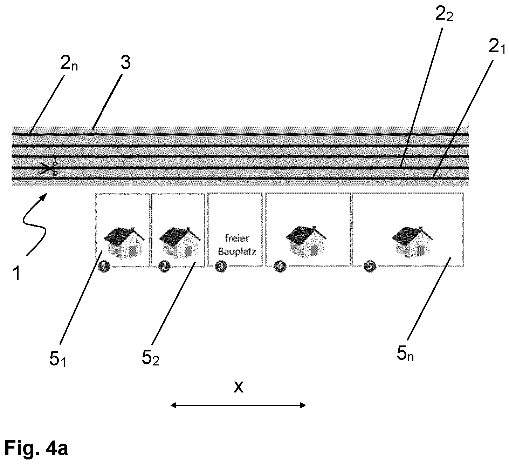

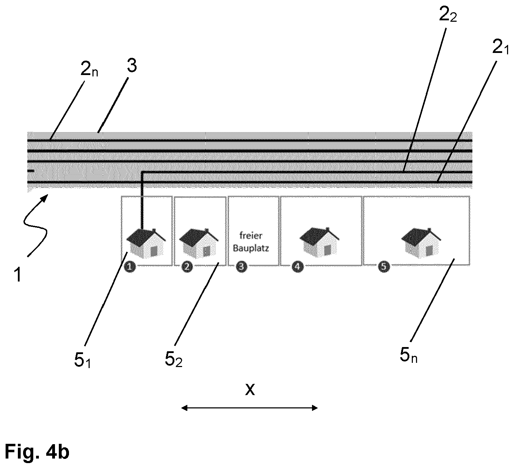

Die Figuren 4a und 4b zeigen beispielhaft die Bereitstellung eines Glasfaserkabels aus dem in der Kabeltrasse verlegten Kabelverbund 1 für eines der fünf an der Kabeltrasse gelegenen Grundstücke 5₁ - 5ₙ. Sofern die Kabel durch ein nicht erfindungsgemäßes einziges sich über ihre gesamte Länge erstreckendes Verbundelement zu dem Kabelverbund zusammengefasst sind, wird auf der Höhe dieses Grundstücks 5₁ - hier im Detail nicht näher gezeigt - eine erste Ausnehmung in das den abgetrennten Abschnitt des Kabelverbunds 1 auf dessen gesamter Länge umgebende Verbundelement 3 eingebracht. Im weiteren Verlauf des Kabelverbunds 1, hier links von dem zu versorgenden, respektive anzuschließenden Grundstück 5₁, wird in einer Entfernung, welche mindestens der Entfernung zwischen der ersten, auf der Höhe dieses Grundstücks 5₁ eingebrachten Ausnehmung und einem auf diesem Grundstück vorgesehenen Anschlusspunkt für das Kommunikationskabel 2₂ entspricht, eine zweite Ausnehmung in das Verbundelement 3 des Kabelverbunds 1 eingebracht (ebenfalls nicht im Detail gezeigt).

Durch diese zweite Ausnehmung hindurch wird dann das zur Schaffung des Abzweigs zum dem zu versorgenden Grundstück 5₁ vorgesehene Kabel 2₂ (Glasfaserkabel) durchtrennt. Das durchtrennte Glasfaserkabel wird schließlich an der ersten Ausnehmung auf Höhe des Grundstücks 5₁, für welches das Glasfaserkabel (Kabel 2₂) bereitzustellen ist, aus dem Kabelverbund 1 herausgelöst sowie bis zu einem auf diesem Grundstück 5₁ dafür vorgesehenen Anschlusspunkt verlegt. Das entsprechende, zuvor durchgetrennte Glasfaserkabel kann zum Beispiel an einer Farbmarkierung auf dem Kabelmantel beziehungsweise an einem Farbcode (beispielsweise nach VDE) erkannt werden. Das Erzeugen der vorgenannten Öffnungen (erste Ausnehmung und zweite Ausnehmung) auf der Baustelle, zum Durchtrennen und Herausziehen eines Kabels 2₁ - 2ₙ, aus dem Rohrverbund 1, kann - wie bereits ausgeführt - entfallen, sofern die Kabel 2₁ - 2ₙ, mittels mehrerer streifenförmiger. voneinander beabstandeter Verbundelemente 3, 3', 3" zu dem Kabelverbund 1 zusammengefasst sind.

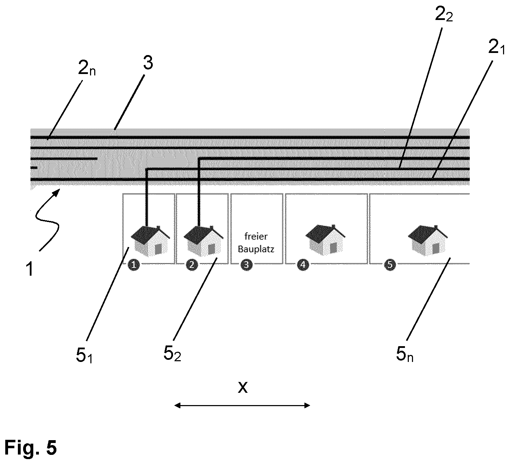

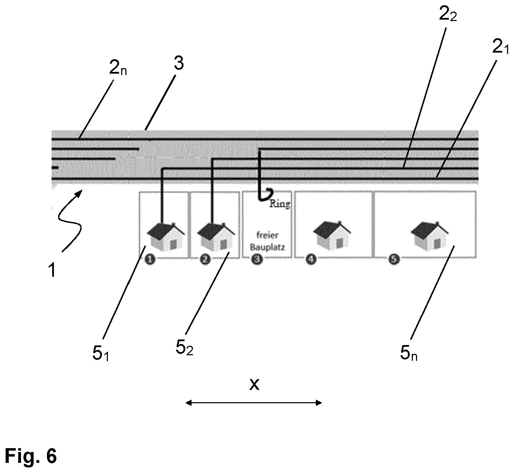

Wie in der Fig. 5 beispielhaft in Bezug auf ein weiteres an der Trasse gelegenes Grundstück 5₂ gezeigt, können in der zuvor dargestellten Weise weitere Glasfaserkabel (Kabel 2₁ - 2ₙ) aus dem Kabelverbund 1 herausgelöst und von diesem abzweigend zum Anschluss eines jeweiligen Grundstücks 5₁ - 5ₙ verwendet werden. Ferner können außerdem, wie in der Fig. 6 dargestellt, für Grundstücke 5₁ - 5ₙ die entweder noch gar nicht bebaut sind oder für die zunächst noch kein Anschluss an das Netz des Telekommunikationsunternehmens vorgesehen ist, welches den Kabelverbund 1 verlegt oder in dessen Auftrag dieser verlegt wird, bereits vorsorglich Glasfaserkabel für den eventuellen späteren Anschluss bereitgestellt werden. Hierbei unterscheidet sich die zur Fig. 4a, 4b und 5 erläuterte Vorgehensweise lediglich darin, dass das jeweilige, vorsorglich bereitgestellte Glasfaserkabel (Kabel 2₁ - 2ₙ) noch nicht mit einem Anschlusspunkt der betreffenden Grundstücke 5₁ - 5ₙ verbunden wird, sondern dieses nach seinem Herauslösen aus der Kabelverbund 1 beispielsweise in Form eines Rings, einer Schlaufe oder dergleichen verlegt, im Boden verbleibt oder sein Ende zu einem gewissermaßen einen Platzhalter ausbildenden definierten Übergabepunkt zur eventuellen späteren Verwendung geführt wird.

## Patentansprüche

1. Kabelverbund (1) mit mehreren sammengefassten, jeweils aus mindestens einer Übertragungsleitung und einem umgebenden Kabelmantel bestehenden Kabeln (2₁ - 2ₙ), wobei der Kabelverbund ausgelegt ist, zu einer gemeinsamen Verlegung der Kabel (2ᵢ-2ₙ) herstellerseitig auf einer Kabeltrommel (4) aufgetrommelt zu werden, **dadurch gekennzeichnet, dass** die Kabel (2₁ - 2ₙ) mittels mehrerer die Kabel (2ᵢ-2ₙ) umgebender, in der Längsrichtung (x) des Kabelverbunds (1) untereinander beabstandeter streifenförmiger Verbundelemente (3, 3', 3") direkt zu dem Kabelverbund (1) zusammengefügt sind, und zwar derart, dass jedes der Kabel (2₁ - 2ₙ) bezüglich eines jeweiligen, bei der Verlegung von der Kabeltrommel (4) abgerollten Abschnitts des Kabelverbunds (1) innerhalb der die Kabel (2₁ - 2ₙ) umgebenden streifenförmigen Verbundelemente (3, 3', 3") gegen diese Verbundelemente (3, 3', 3") und gegen die jeweils anderen Kabel (2₁ - 2ₙ) des Kabelverbunds (1) in der Längsrichtung (x) beweglich sowie dadurch über eine, aufgrund der Abstände zwischen den streifenförmigen Verbundelementen (3, 3', 3") in dem Kabelverbund (1) bestehende Ausnehmung zur Schaffung eines Kabelabzweigs aus dem Kabelverbund (1) herauslösbar ist.

2. Kabelverbund (1) nach Anspruch 1, **dadurch gekennzeichnet, dass** es sich bei den zu dem Kabelverbund (1) zusammengefassten Kabeln (2₁ - 2ₙ) um Kommunikationskabel handelt.

3. Kabelverbund (1) nach Anspruch 2, **dadurch gekennzeichnet, dass** mindestens eines der zu dem Kabelverbund (1) zusammengefassten Kabel (2₁ - 2ₙ) ein Kommunikationskabel mit mehreren zur Datenübertragung ausgebildeten, von einem gemeinsamen Kabelmantel umgebenen Übertragungsleitungen ist.

4. Kabelverbund (1) nach Anspruch 3, **dadurch gekennzeichnet, dass** es sich bei den Kommunikationskabeln (2₁ - 2ₙ) um Lichtleiterkabel, insbesondere um Glasfaserminikabel oder um Glasfasermikrokabel, mit jeweils einer Mehrzahl von Lichtleitfasern handelt.

5. Kabelverbund (1) nach einem der Ansprüche 1 bis 4, **dadurch gekennzeichnet, dass** die Verbundelemente (3, 3', 3") aus Kunststoff bestehen.

6. Kabelverbund (1) nach Anspruch 5, **dadurch gekennzeichnet, dass** das oder die Verbundelemente (3, 3', 3") aus Polyethylen bestehen.

## Claims

1. Cable assembly (1) comprising a number of cables (2₁ - 2ₙ) which are grouped together and each consist of at least one transmission line and a surrounding cable sheath, wherein the cable assembly is designed to be rolled up on a cable drum (4) at the manufacturer's, for the cables (2ᵢ-2ₙ) to be laid at one and the same time, **characterized in that** the cables (2₁ - 2ₙ) are joined together directly to form the cable assembly (1) by means of a number of strip-like embracing elements (3, 3', 3") which surround the cables (2ᵢ-2ₙ) and are kept at a distance from one another in the longitudinal direction (x) of the cable assembly (1), to be precise they are joined together in such a way that, with respect to a respective section of the cable assembly (1) unrolled from the cable drum (4) during laying, each of the cables (2₁ - 2ₙ) is movable, within the strip-like embracing elements (3, 3', 3") which surround the cables (2₁ - 2ₙ), in the longitudinal direction (x) in relation to these embracing elements (3, 3', 3") and in relation to the other cables (2₁ - 2ₙ) in each case of the cable assembly (1) and, as a result, can be removed from the cable assembly (1) by way of a clearance, existing in the cable assembly (1) because of the distances between the strip-like embracing elements (3, 3', 3"), to create a cable branch.

2. Cable assembly (1) according to Claim 1, **characterized in that** the cables (2₁ - 2ₙ) grouped together to form the cable assembly (1) are communication cables.

3. Cable assembly (1) according to Claim 2, **characterized in that** at least one of the cables (2₁ - 2ₙ) grouped together to form the cable assembly (1) is a communication cable with a number of transmission lines designed for data transmission and surrounded by a common cable sheath.

4. Cable assembly (1) according to Claim 3, **characterized in that** the communication cables (2₁ - 2ₙ) are fibre-optic cables, in particular mini or micro fibre-optic cables, each with a plurality of optical fibres.

5. Cable assembly (1) according to one of Claims 1 to 4, **characterized in that** the embracing elements (3, 3', 3") consist of plastic.

6. Cable assembly (1) according to Claim 5, **characterized in that** the embracing element or elements (3, 3', 3") consist of polyethylene.

## Revendications

1. Faisceau de câbles (1) comprenant plusieurs câbles (2₁ - 2ₙ) réunis, respectivement constitués d'au moins une ligne de transmission et d'une gaine de câble qui les entoure, le faisceau de câbles étant conçu pour être enroulé par le fabricant sur un tambour de câble (4) en vue d'une pose commune des câbles (2ᵢ-2ₙ), **caractérisé en ce que** les câbles (2₁ - 2ₙ) sont assemblés directement en le faisceau de câbles (1) au moyen de plusieurs éléments composites (3, 3', 3") en forme de bande entourant les câbles (2ᵢ-2ₙ) et espacés les uns des autres dans la direction longitudinale (x) du faisceau de câbles (1), et cela, de telle sorte que chacun des câbles (2₁ - 2ₙ), par rapport à une partie respective du faisceau de câbles (1) déroulée lors de la pose du tambour de câble (4), puisse être détaché du faisceau de câbles (1) à l'intérieur des éléments composites en forme de bande (3, 3', 3") entourant les câbles (2₁ - 2ₙ), contre ces éléments composites (3, 3', 3") et contre les autres câbles (2₁ - 2ₙ) respectifs du faisceau de câbles (1), de manière mobile dans la direction longitudinale (x), et pour ainsi créer une dérivation de câble par l'intermédiaire d'un évidement présent dans le faisceau de câbles (1) en raison des espacements entre les éléments composites (3, 3', 3") en forme de bande.

2. Faisceau de câbles (1) selon la revendication 1, **caractérisé en ce que** les câbles (2₁ - 2ₙ) réunis pour former le faisceau de câbles (1) sont des câbles de communication.

3. Faisceau de câbles (1) selon la revendication 2, **caractérisé en ce qu'**au moins l'un des câbles (2₁ - 2ₙ) réunis pour former le faisceau de câbles (1) est un câble de communication comprenant plusieurs lignes de transmission conçues pour la transmission de données et entourées par une gaine de câble commune.

4. Faisceau de câbles (1) selon la revendication 3, **caractérisé en ce que** les câbles de communication (2₁ - 2ₙ) sont des câbles à fibres optiques, en particulier des mini-câbles à fibres optiques ou des micro-câbles à fibres optiques, comprenant respectivement une pluralité de fibres optiques.

5. Faisceau de câbles (1) selon l'une des revendications 1 à 4, **caractérisé en ce que** les éléments composites (3, 3', 3") sont constitués de matière plastique.

6. Faisceau de câbles (1) selon la revendication 5, **caractérisé en ce que** le ou les éléments composites (3, 3', 3") sont constitués de polyéthylène.
